# EUROPÄISCHE PATENTSCHRIFT

(11) **EP 0 705 188 B1**
(45) Veröffentlichungstag und Bekanntmachung des Hinweises auf die Patenterteilung: **30.09.1998**
(21) Anmeldenummer: 94911871.5
(22) Anmeldetag: 09.03.1994
(51) Int. Cl.: B60S 1/52

(54) **DÜSENVIELFACH MIT EINSTÜCKIGER DICHTUNG FÜR SCHEIBENREINIGUNGSANLAGE**
MULTIPLE NOZZLE WITH ONE-PIECE SEAL FOR WINDSCREEN WASHER SYSTEMS
AJUTAGE MULTIPLE A GARNITURE D'ETANCHEITE EN UNE SEULE PIECE POUR SYSTEMES ESSUIE-GLACE

(30) Priorität: 26.06.1993 DE 4321327
(43) Veröffentlichungstag der Anmeldung: 10.04.1996
(73) Patentinhaber: ITT Automotive Europe GmbH, 60488 Frankfurt (DE)
(72) Erfinder: KRIZEK, Oldrich, D-74321 Bietigheim-Bissingen (DE); LANGENFELDER, Frank, D-74074 Heilbronn (DE); OEHLER, Gerhard, D-74392 Freudental (DE); SCHMID, Eckhardt, D-74336 Brackenheim (DE)
(86) Internationale Anmeldenummer: EP9400719
(87) Internationale Veröffentlichungsnummer: WO9500371

(56) Entgegenhaltungen:
- DE-A- 2 337 774
- DE-A- 3 907 980
- DE-B- 1 205 405
- FR-A- 2 673 154

## Beschreibung

Die Erfindung betrifft einen Düsenkörper mit mindestens einem im wesentlichen starren Düsengehäuse für eine Spritzvorrichtung einer Scheibenreinigungsanlage mit mehreren Düsen (siehe die DE-B-1 205 405). Aus der DE-B-12 05 405 ist eine Sprühdüse für Windschutzscheiben-Waschanlagen in Kraftfahrzeugen mit mindestens einem im wesentlichen starren Düsengehäuse bekannt, welches einen zur Zuführung von Waschflüssigkeit dienenden Zuführungskanal aufweist. Der Zuführungskanal endet in einer zugehörigen, zur Umgebung hin öffnenden Mündungsöffnung am Umfang des Düsengehäuses, und im Bereich der Mündungsöffnung wird gemeinsam von einem Teil des Düsengehäuses und von einem Abschnitt einer elastischen Dichtung, welche an dem Düsengehäuse befestigt ist, eine Düse gebildet. Im Normalzustand liegt die elastischen Dichtung an dem Teil des Düsengehäuses an und verschließt die Mündungsöffnung. Beim Betrieb der Waschanlage verformt sich die Dichtung elastisch unter dem Druck geförderter Waschflüssigkeit und bildet so im Zusammenwirken mit einem Teil des Düsengehäuses eine Düsenöffnung. Hier ist zwar die einzige Düsenöffnung bereits zum Austritt eines fächerförmigen Spritzstrahles ausgebildet, trotzdem ist in vielen Anwendungsfällen eine darüber hinausgehende, großflächigere Verteilung der abgegebenen Waschflüssigkeit erwünscht, vor allem dann, wenn die Spritzdüse am Wischhebel einer Scheibenwischvorrichtung angebracht ist und mit diesem über die zu reinigende Scheibe bewegt wird.

Aus der DE-A-39 07 980 ist eine Scheibenreinigungsanlage bekannt, bei der eine Spritzvorrichtung mehrere Düsenelemente aus elastischem Werkstoff aufweist. Da die Strahlrichtung der Düsenelemente verstellbar sein soll, sind diese in beweglichen Düsenkörpern gefaßt, welche in einem gemeinsamen Düsengehäuse sitzen. Die Beweglichkeit der Düsenelemente setzt einen relativ komplizierten Aufbau des Düsengehäuses voraus.

Aus der DE-A-25 03 496 ist ein Düsengehäuse bekannt, bei dem die Düse durch eine einfache Bohrung durch die Wand des Düsengehäuses dargestellt ist, wobei diese Bohrung dann mit einem zentralen Kanal verbunden ist. Die Herstellung der Bohrungen bedeutet einen nicht unbeachtlichen Aufwand. Die Bohrungen sind auch in ihrem Durchmesser festgelegt und lassen sich in verstopfte Zustand nur schwer reinigen.

Aus der DE-A-18 00 013 ist ein Düsengehäuse bekannt, welches aus einem elastischen Material besteht, so daß die Düse sich unter dem Druck der Waschflüssigkeit erweitern und mögliche Schmutzteile ausstoßen kann. Dieses Düsengehäuse ähnelt in seiner Arbeitsweise dem Düsengehäuse gemäß der DE-A-39 07 980 , ist aber nur für eine einzige Düse vorgesehen.

Aus der US-PS 39 40 068 ist es bekannt, Düsen für eine Spritzvorrichtung dadurch zu bilden, daß ein deckelförmiges Düsenelement in das Düsengehäuse eingebracht wird und damit den ergänzenden Teil der Kanalwände bildet, die als offene Kanäle an der Oberfläche des Düsengehäuses eingebracht sind. Der Vorteil besteht insbesondere darin, daß die Kanäle vergleichsweise einfach hergestellt werden können und ein Reinigen der Austrittsöffnungen der Düsen ohne Schwierigkeiten durch kurzzeitiges Entfernen des Düsenelementes möglich ist. Nachteilig bei dem aus der US-A-39 40 068 bekannten Düsengehäuse ist es, daß die Düsen in ihrem Durchmesser unveränderbar sind und die Reinigungsmöglichkeit nicht besteht, wenn das Düsenelement zur Sicherung gegen Verlust in dem Düsengehäuse fest verankert ist.

Die Erfindung geht aus von einem Düsenkörper gemäß DE-B-12 05 405 bzw. gemäß dem Oberbegriff des Anspruchs 1.

Aufgabe der Erfindung ist es, mit einfachen Mitteln eine Düse zu schaffen, welche in ihrer Durchtrittsöffnung von dem Druck der verspritzten Waschflüssigkeit abhängig ist und welche eine großflächigere Verteilung der abgegebenen Waschflüssigkeit ermöglichen. Derartige Düsen haben insbesondere den Vorteil der Selbstreinigung, da hier aufgrund des wachsenden Drucks der Verstopfungen die verstopfenden Partikel durch die sich dann öffnende Düse ausgestoßen werden. Weiterhin können derartige Düsen auch derart ausgestaltet werden, daß sie im Ruhezustand verschlossen sind, so daß Frostschutzmittel nicht verdunsten kann und mögliche Eiskrusten durch den unter dem Druck der Waschflüssigkeit elastisch bewegten Abschnitt der Dichtung abgesprengt werden.

Die Aufgabe wird durch einen Düsenkörper gemäß Anspruch 1 gelöst. Um eine größere Fläche für den Wischvorgang mit Flüssigkeit zu benetzen, ist vorgesehen, daß bei einem Düsenkörper, von dem die Erfindung ausgeht, nunmehr das Düsengehäuse mehrere, vorwiegend in einer Ebene liegende Mündungsöffnungen (15) aufweist, die durch eine allen Mündungsöffnungen (15) gemeinsame Dichtung (4) eine entsprechende Anzahl von Düsen bilden.

Damit formt ein einziger elastischer Körper, vorzugsweise in einer flachen Dichtung, einen Teil aller Seitenwände aller gewünschten Düsen. Es lassen sich auf diese Weise somit mehrere erfindungsgemäße Düsen mittels einer einzigen Dichtung bilden, wodurch sich eine recht einfache und preiswerte Konstruktion für einen Vieldüsenkörper ergibt.

Soweit die einzelnen Düsen ringförmig auf den Umfang eines Düsenkörpers verteilt sind, empfiehlt sich in Weiterbildung der Erfindung die Merkmalskombination nach Anspruch 2. Eine besonders einfache Konstruktion bekommt man dabei durch die Anwendung der Merkmale nach Anspruch 3, da wegen der Zylinderform die Düsenelemente an der geteilten Mantelfläche des Körpers angeordnet werden können.

Dies trifft insbesondere dann zu, wenn die Merkmale nach Anspruch 4 angewendet werden. Dabei lassen sich die aus Haltekörper und Deckel bestehenden Teile des Düsengehäuses in einfacher Weise durch Verschrauben oder Verrasten miteinander verbinden.

Eine weitere Vereinfachung läßt sich dadurch erreichen, daß gemäß der Merkmalskombination nach Anspruch 5 insbesondere an dem Deckel ein Anschlußstutzen zur Befestigung einer Schlauchleitung angefügt ist, über die die Waschflüssigkeit zugeführt wird.

Da die zu waschende Scheibe insbesondere dort gerade benetzt sein soll, in der die Wischerblätter sich befinden, empfiehlt sich die an sich bekannte Maßnahme, das Düsengehäuse an dem Wischerarm zu befestigen. Diese Maßnahme wird insbesondere durch die Merkmale nach Anspruch 6 unterstützt. Die beiden Rastarme des Clip können beispielsweise wie in der US-A-39 40 068 beschrieben, den Wischerarm direkt umfassen. Es kann zusätzlich aber zur Sicherung noch ein Steg vorgesehen sein, welcher ein Heruntergleiten des Gehäuses von dem Wischerarm ausschließt und somit als zusätzliche Sicherung für die Rastverbindung dient. Auch dieser Steg läßt sich mit den Rastarmen des Gehäuses rastend verbinden, wie dies gemäß den Merkmalen von Anspruch 6 vorgesehen ist. Der Steg selber kann auch gegenüber einem der Rastarme schwenkbar an diesem einstückig angeformt sein. Die Befestigung des Düsengehäuses auf der Motorhaube ist aber auch ebenfalls möglich.

Wie eingangs schon erwähnt, lassen sich einzelne Bereiche der Dichtung den einzelnen Düsen eines Düsenvielfachs zuordnen. Die nicht direkt einen Teil der Düse bildenden Bereiche der Dichtung werden dabei durch entsprechende Ansätze des Düsengehäuses gehalten, und zwar derart, daß sie vorzugsweise in Verschlußrichtung der Düse vorgespannt werden. Um nun zu erreichen, daß sich trotz der eingespannten Dichtung die Öffnung der Düse hinreichend weit öffnen läßt, empfiehlt sich in Weiterbildung der Erfindung die Merkmalskombination nach Anspruch 8. Danach ist der im Bereich der Düsenöffnung liegende Bereich des Gehäuses ausgespart, um dem elastischen Element Raum für eine Öffnungsbewegung zur Öffnung des Düsendurchmessers gemäß Anspruch 8 zu lassen.

In vorteilhafter Weiterbildung der Erfindung ist bei dem Düsenkörper ein zentraler, vorzugsweise mit dem Anschlußstutzen verbundener Kanal vorgesehen, von dem aus gemäß der Weiterbildung entsprechend Anspruch 9 einzelne zur bestreffenden Düse führenden Kanäle abgehen, die im wesentlichen senkrecht zur Außenfläche verlaufen. Hierzu empfiehlt sich in Weiterbildung der Erfindung, daß entsprechend der Merkmale nach Anspruch 11 an dem Steg und/oder dem Deckel Vorsprünge mit entsprechenden Widerlagerflächen an dem gegenüberliegenden Bauteil vorgesehen sind, die den als Dichtung ausgestalteten Haltekörper einspannen und somit für die Vorspannung sorgen, die dieser benötigt, um die Mündungsöffnungen bei druckloser Waschflüssigkeit zu verschließen.

Eine besonders einfache Befestigungsart des Deckels an dem Haltekörper ist in vorteilhafter Weiterbildung in Anspruch 12 aufgeführt.

Die Erhöhung der Stabilität des Düsenkörpers ist in Anspruch 13 aufgeführt. Die Verbindung der beiden Elemente des Düsenkörpers kann in einfacher Weise gemäß den Merkmalen nach Anspruch 14 geschehen. In bevorzugten Beispielen ist die allen Düsen gemeinsame Dichtung flach in die Ebene der Düsen gelegt. Eine andere Möglichkeit besteht in vorteilhafter Weiterbildung entsprechend der Merkmalskombination nach Anspruch 15 darin, daß die Dichtung im Winkel zu den zu den Düsenöffnungen führenden Kanälen angeordnet, vorzugsweise um die Mantelfläche des zylindrischen Gehäuses gelegt ist.

Eine andere vorteilhafte Ausführungsform ist dadurch gegeben, daß entsprechend der Merkmalskombination nach Anspruch 15 die Dichtung in sich derart aufgebaut ist, daß sie in ihrem Randbereich im Winkel zu dem mittleren Bereich der Dichtungsfläche verläuft. Die unter der Eigenvorspannung der Dichtung liegenden Bereiche können dann zum Verschließen der Düsenöffnungen dienen.

Ausführungsbeispiele der Erfindung werden nachfolgend anhand der Zeichnung erläutert. Darin zeigen
- Fig. 1 bis 10: Schnitte und verschiedene Ansichten bzw.Teilansichten eines ersten Ausführungsbeispiels,
- Fig. 11 und 12: in zum Teil geschnittener und zum Teil skizzierter Darstellungsform ein zweites Ausführungsbeispiel,
- Fig. 13 und 14: in geschnittener und teilweise skizzierter Form ein drittes Ausführungsbeispiel,
- Fig. 15 bis 17: in geschnittener und skizzierter Form weitere Ausführungsmöglichkeiten für die Anordnung der Dichtung zwischen Deckel und Halterung.

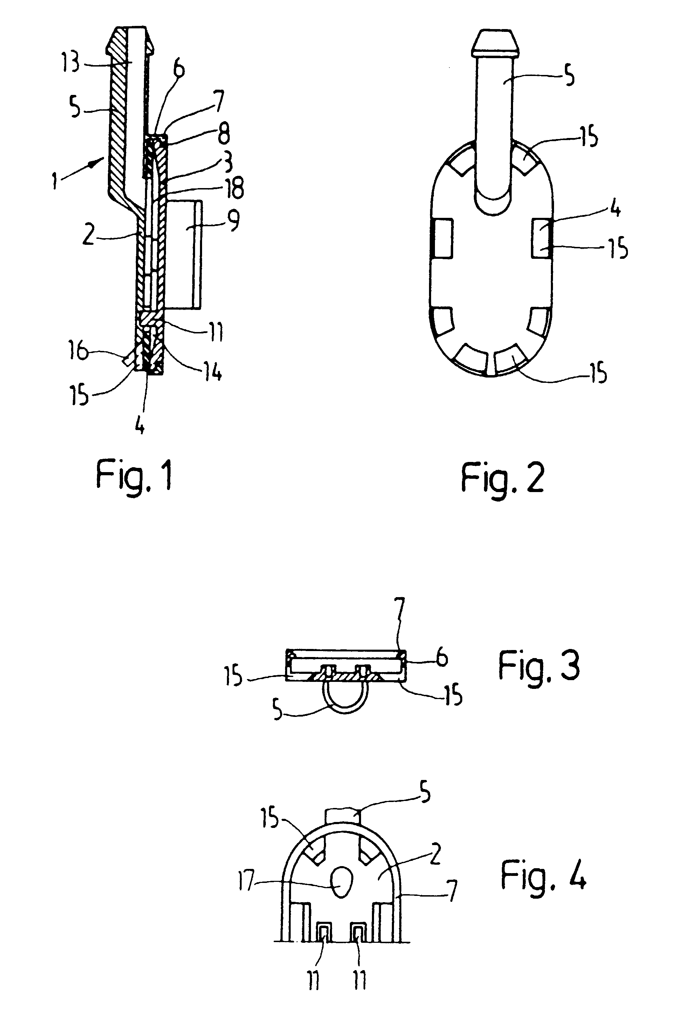

Fig. 1 zeigt ein Düsengehäuse 1, das im wesentlichen aus einem Deckel 2, einem Haltekörper 3 und einer Dichtung 4 besteht. Dabei ist an dem aus Kunststoff gespritzten Deckel 2 ein Anschlußstutzen 5 für den Anschluß eines die Waschflüssigkeit zuführenden Schlauches angegossen. Der Deckel 2 ist vorzugsweise aus Spritzguß hergestellt. Das Halteteil 3 ist mit dem Deckel 2 über Rastvorsprünge 6 rastend verbunden, die von dem Deckel 2 vorspringen und mit Rastnasen 7 in Rastaufnahmen 8 des Haltekörpers 3 einrasten.

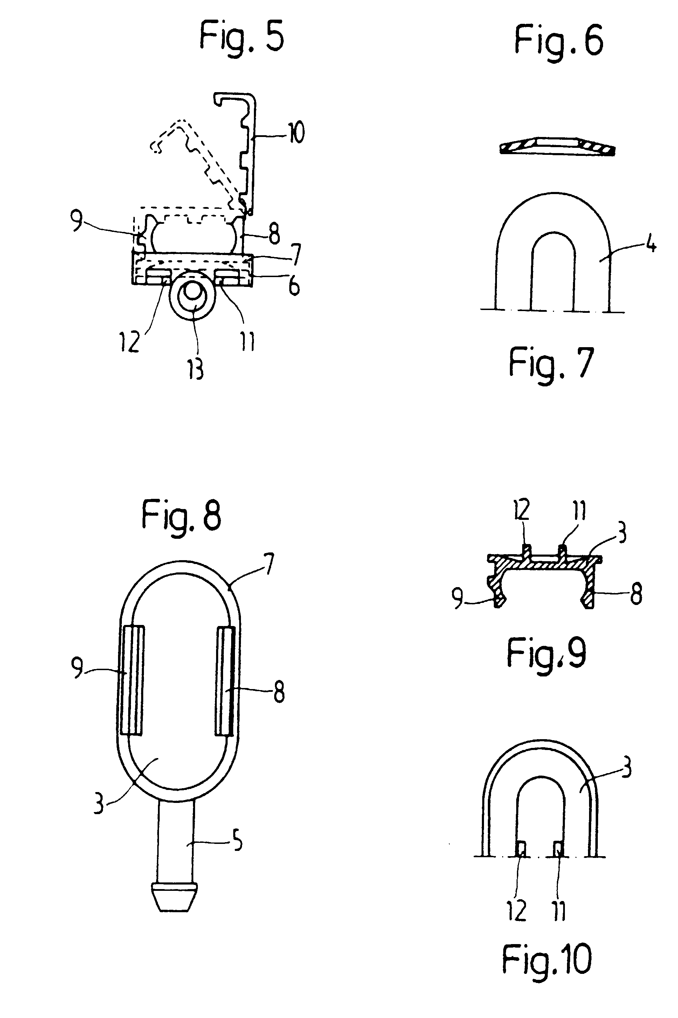

An dem durch ein Kunststoffspritzverfahren hergestellten Haltekörper 3 sind zwei Rastarme 8,9 angegossen (siehe auch Fig. 5, 8 und 9). Über die Rastarme 8 und 9 kann das Düsengehäuse 1 in an sich bekannter Weise an einem Wischerarm angeklipst werden. Zusätzlich kann zur Sicherung an einen der Rastarme (beispielsweise Rastarm 8) ein schwenkbarer Raststeg 10 angegossen sein, welcher gegenüber dem anderen Rastarm 9 verrastbar ist und so sicher verhindert, daß das Düsengehäuse 1 auch unter der Wirkung des Fahrtwindes oder anderer Kräfte von dem Wischerarm fallen kann.

Anstatt durch einzelne Rastnasen 7 an den Rastvorsprüngen 6 kann auch, wie in den Fig. 2, 4 und 8 angedeutet, ein umlaufender Rastring vorgesehen sein, der über einzelne im Abstand zueinander am Umfang des Deckels 2 verteilte Vorsprünge 6 gehalten ist.

In Fig. 1 ist einer von ggf. mehreren Vorsprüngen 11 am Haltekörper 3 zu erkennen, welcher sich gegen eine entsprechende Ausnehmung des Deckels 2 abstützt und auf diese Weise den Deckel 2 gegenüber dem Haltekörper 3 zentriert und den Abstand der beiden Bauelemente des Düsengehäuses zueinander festlegt. In Fig. 9 und 10 ist ein entsprechender zweiter Vorsprung 12 dargestellt.

Wie aus den Fig. 6 und 7 ersichtlich, hat die Dichtung 4 im wesentlichen die Gestalt eines längsgestreckten Rings bzw. O's.

Das Düsengehäuse 1 besitzt einen mit der Zuleitung 13 in dem Anschlußstutzen 5 verbundenen Zentralkanal 17, von dem einzelne Kanäle 14 abgehen, die in Mündungsöffnungen 15 enden. Diese Öffnungen werden durch Teile des äußeren Bereichs der Dichtung 4 verschlossen. Der Rand der Dichtung 4 selbst ist, wie aus Fig. 1 oben und unten ersichtlich, zwischen nach innen ragenden Ansätzen des Haltekörpers 3 und der inneren Oberfläche des Deckels 2 eingeklemmt. Die Mündungsöffnungen 15 sind so angelegt, daß sie unter der Kraft der aus der Düse ausströmenden Waschflüssigkeit ausweichen können und eine Lage einnehmen können, wie sie unter 16 dünn umrissen angedeutet ist.

Fig. 2 zeigt den Deckel 2 von oben gesehen, wobei unterhalb der Mündungsöffnungen 15 die einen beweglichen Teil der Düse bildenden Bereiche der Dichtung 4 zu erkennen sind. Die Rastvorsprünge 6 sind in Höhe der Öffnungen 15 unterbrochen, um den Weg für die durch die Düse austretende Flüssigkeit freizumachen. Fig. 3 zeigt einen Schnitt durch den Deckel 2 etwa in Höhe des Vorsprungs 11 in Fig. 1. Es sind dabei deutlich die Ausnehmungen zu erkennen, in die die Vorsprünge 11,12 des Haltekörpers 3 eingefügt werden.

Fig. 4 zeigt eine Sicht auf den Innenraum des Deckels 2, wobei der Eintritt 17 der Zuleitung 13 zu dem zentralen Kanal 18 erkennbar ist. Fig. 5 zeigt eine Ansicht auf das Düsengehäuse aus in Fig. 1 von oben nach unten weisender Richtung. Fig. 6 zeigt einen Schnitt durch die Dichtung 4 gemäß Fig. 7. Dabei zeigt sich, daß die Dichtung eine gewisse Vorspannung hat, gemäß der sie im nicht eingebauten Normalzustand etwas gewölbt ist. Fig. 8 ist eine Draufsicht auf das Düsengehäuse 1 gemäß Fig. 1 von links nach rechts, wobei die beiden Rastarme 8 und 9 gut zu erkennen sind.

Fig. 9 zeigt einen Schnitt durch den Haltekörper 3 mit den Rastarmen 8 und 9 und den Vorsprüngen 11 und 12. Fig. 10 schließlich ist eine Draufsicht auf den Haltekörper 3 gemäß Fig. 9.

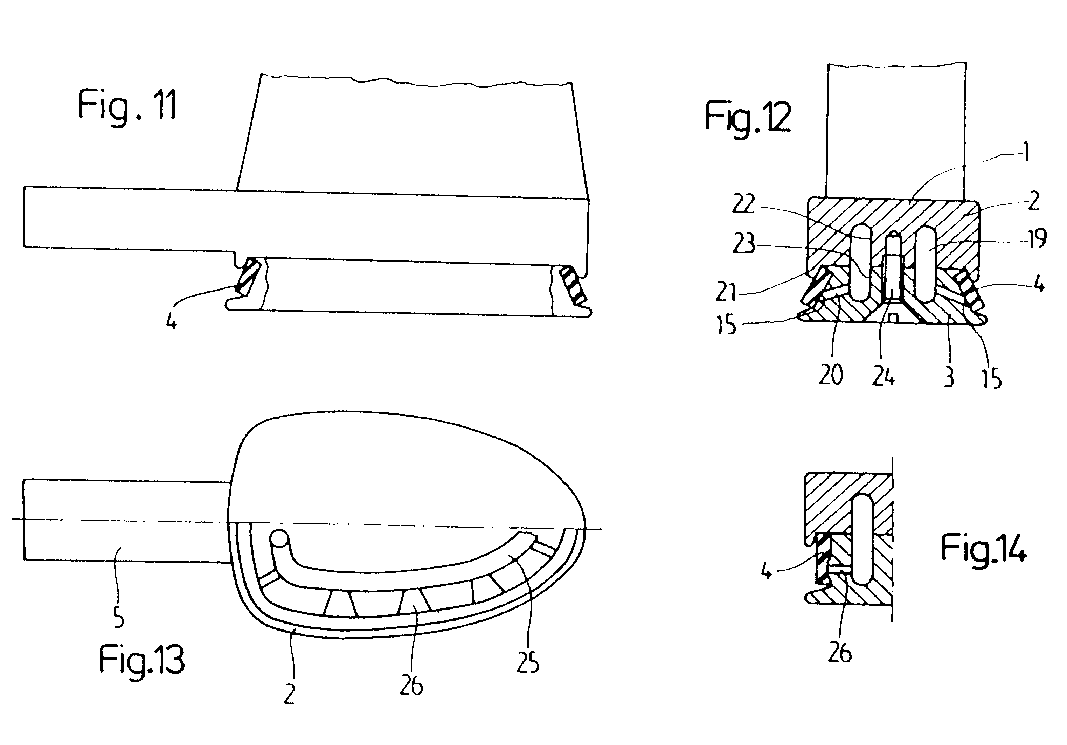

Fig. 11 und 12 zeigt eine zweite Ausführungsform eines Düsengehäuses mit einem ringförmigen Zentralkanal 19, von dem sternförmig einzelne Kanäle 20 abgehen, die in den Haltekörper 3 eingeformt sind. Die Dichtung 4 ist ringförmig vor die Mündungsöffnungen 15 der Kanäle 20 gelegt, so daß sie mit ihrer inneren Mantelfläche diese Mündungsöffnungen elastisch verschließt. Durch den Druck der Waschflüssigkeit wird die Mündungsöffnung düsenförmig geöffnet. Ein umlaufender Vorsprung 21 am Deckel 2 umgreift Teile der ringförmigen Dichtung und fixiert sie so.

Wie aus Fig. 12 ersichtlich, liegen zwei mittlere Vorsprünge 22,23 von Deckel 2 und Haltekörper 3 gegeneinander. Eine in die mittleren Vorsprünge eingreifende Schraubverbindung 24 verschraubt die beiden Elemente des Düsengehäuses 1 miteinander.

Fig. 13 und 14 zeigt eine weitere Ausführungsform, wobei ein im wesentlichen ringförmiger zentraler Kanal 25 in dem Deckel 2 angedeutet ist, von welchem fächerförmig einzelne Kanäle 26 abzweigen. Die Befestigung der Dichtung 4 gemäß Fig. 14 unterscheidet sich von der gemäß Fig. 12 nur dadurch, daß die Dichtung 4 zu den Kanälen 26 senkrecht steht, während die Kanäle 20 in Fig. 12 gegenüber der Dichtung 4 geneigt sind.

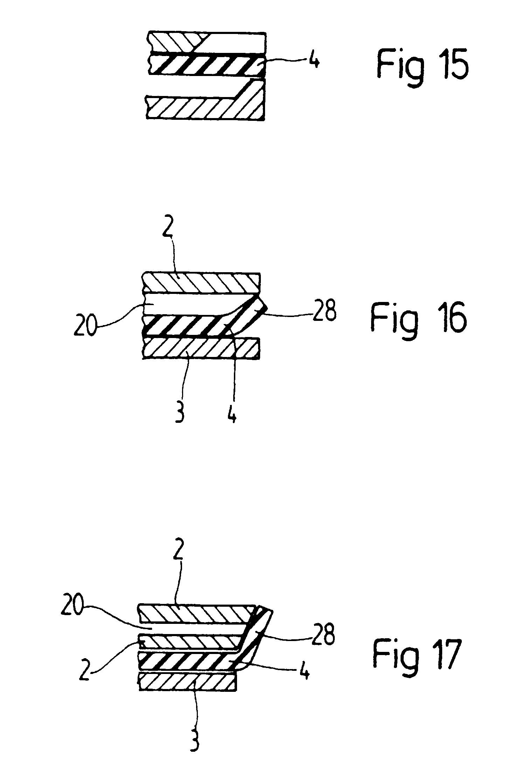

Die Fig. 15, 16 und 17 deuten weitere Lösungsmöglichkeiten für die Ausgestaltung der Mündungsöffnung der Düsen an. Dabei entspricht die Lösung gemäß Fig. 15 weitgehend der in Fig. 1 bis 10 gezeigten und soll daher nicht näher erläutert werden.

Fig. 16 ist insofern einfacher, als Gehäuse 2 und Haltekörper 3 hinsichtlich des Kanals 20 glatte Flächen besitzen. Allerdings setzt diese Lösung voraus, daß die Dichtung 4 eine Vorspannung aufweist, die in ihrem unbelasteten Normalzustand zu einer gewinkelten Lage des äußeren Bereichs der Dichtung 4 führt. Hierdurch kann durch den Druck des Waschmittels in dem Kanal 20 die Dichtung federnd in eine weniger gekrümmte Lage gebracht werden, in der das Wasser die dann geöffnete Düse passiert. Eine wiederum andere Ausgestaltung zeigt Fig. 17, bei der die Dichtung 4 zwischen glatte Flächen des Deckels 2 und des Haltekörpers 3 eingespannt ist. Aufgrund der Vorspannung des äußeren Bereichs 28 der Dichtung wird der Kanal 20 elastisch verschlossen.

## Patentansprüche

1. Düsenkörper mit mindestens einem im wesentlichen starren Düsengehäuse(1) für eine Spritzvorrichtung, welches einen zur Zuführung von Waschflüssigkeit dienenden Zuführungskanal (14) aufweist, wobei der Zuführungskanal (14) in einer zugehörigen, zur Umgebung hin öffnenden Mündungsöffnung (15) am Umfang des Düsengehäuses (1) endet und eine Düse im Bereich einer Mündungsöffnung (15) gemeinsam von einem Teil des Düsengehäuses (1) und von einem Abschnitt einer elastischen Dichtung (4), welche in dem oder an dem Düsengehäuse (1) befestigt ist, gebildet wird, wobei der Abschnitt der elastischen Dichtung (4) im Normalzustand an dem Teil des Düsengehäuses (1) anliegt und die Mündungsöffnung (15) verschließt oder unter dem Druck geförderter Waschflüssigkeit sich elastisch verformt und im Zusammenwirken mit einem Teil des Düsengehäuses (1) eine Düsenöffnung bildet, dadurch **gekennzeichnet**, daß das Düsengehäuse (1) mehrere, vorwiegend in einer Ebene liegende Mündungsöffnungen (15) aufweist, die durch eine allen Mündungsöffnungen (15) gemeinsame Dichtung (4) eine entsprechende Anzahl von Düsen bilden.

2. Düsenkörper nach Anspruch 1, dadurch **gekennzeichnet**, daß die Düsen alle in einer Ebene liegen und die Dichtung (4) vorzugsweise ringförmig ist.

3. Düsenkörper nach einem der vorangegangenen Ansprüche, dadurch **gekennzeichnet**, daß die Düsen entlang der Mantelfläche des zylinderförmigen Gehäuses (1) im Abstand verteilt sind.

4. Düsengehäuse nach einem der vorangegangenen Ansprüche, dadurch **gekennzeichnet**, daß das Gehäuse (1) geteilt und durch einen Haltekörper (3) mit einem aufgerasteten oder aufgeschraubten Deckel (2) gebildet ist.

5. Düsenkörper nach Anspruch 4, dadurch **gekennzeichnet**, daß an den Deckel (1) ein mit dem Kanal (14) verbundener Anschlußstutzen (5) für den zur Zufuhr der Waschflüssigkeit dienenden Schlauch vorgesehen ist.

6. Düsenkörper nach einem der vorangegangenen Ansprüche, dadurch **gekennzeichnet**, daß an den Haltekörper ein Rastclip (8,9) zur rastenden Verbindung mit einem Wischerarm oder der Motorhaube angeformt ist, wobei der Rastclip (8,9) vorzugsweise mit einem Steg (10) versehen ist, der rastend mit den Schenkeln des Rastclips (8,9) verbindbar ist und so den Wischerarm bzw. einen Ansatz an der Motorhaube umfaßt.

7. Düsenkörper nach einem der vorangegangenen Ansprüche, dadurch **gekennzeichnet**, daß ein oder mehrere Bereiche der Dichtung von entsprechenden Ansätzen (6) des Düsengehäuses (1) umfaßt und vorzugsweise mit Vorspannung in Verschlußrichtung der Düse gehalten werden.

8. Düsenkörper nach einem der vorangegangenen Ansprüche, dadurch **gekennzeichnet**, daß das Düsengehäuse an die Mündungsöffnungen (15) angrenzende Ausnehmungen aufweist, die für die Bewegungsfreiheit der Dichtung (4) beim Öffnen der Düse sorgen.

9. Düsenkörper nach einem der vorangegangenen Ansprüche, dadurch **gekennzeichnet**, daß in dem Gehäuse ein zentraler Versorgungskanal (18) vorgesehen ist, von dem im wesentlichen senkrecht zur Außenfläche (6) verlaufende Kanäle (14) abgehen, die in die Mündungsöffnungen (15) eintreten.

10. Düsenkörper nach einem der vorangegangenen Ansprüche, dadurch **gekennzeichnet**, daß die ringförmige Dichtung (4) senkrecht oder geneigt zu dem in die Mündung eintretenden Kanal (14) angeordnet ist.

11. Düsenkörper nach einem der vorangegangenen Ansprüche, dadurch **gekennzeichnet**, daß die im wesentlichen ringförmige Dichtung (4) durch Stege (11) des Deckels (2) oder des Haltekörpers (3) eingespannt ist, wobei die Stegwände die zugehörigen Kanäle (14) seitlich begrenzen.

12. Düsenkörper nach einem der vorangegangenen Ansprüche, dadurch **gekennzeichnet**, daß die Stege des Deckels (2) mit Rastvorsprüngen (7) versehen sind, durch welche der Deckel (2) gegen den Haltekörper (3) verrastbar ist.

13. Düsenkörper nach einem der vorangegangenen Ansprüche, dadurch **gekennzeichnet**, daß der Zentralkanal (19) ringförmig verläuft und über den die innere Seitenwand des Zentralkanals bildenden Vorsprung (22,23) des Haltekörpers (3) und/oder des Deckels sich der Haltekörper (3) und der Deckel (2) gegeneinander abstützen.

14. Düsenkörper nach Anspruch 13, dadurch **gekennzeichnet**, daß der Deckel (2) und der Haltekörper (3) miteinander verschraubt sind und die Schraubverbindung durch zumindest einen der Vorsprünge (22,23) geführt ist (Fig. 12).

15. Düsenkörper nach einem der vorangegangenen Ansprüche, dadurch **gekennzeichnet**, daß der umlaufende Randbereich (28) der Dichtung (4) gegenüber ihrem flachen Mittelbereich aufgrund der der Dichtung innewohnenden Vorspannung winklig verläuft, wobei der Randbereich sich gegen die Mündungsöffnung (15) legt und diese bei druckloser Waschflüssigkeit verschließt.

## Claims

1. Nozzle unit with an essentially rigid nozzle housing (1) for a spraying device, provided with a supply channel (14) delivering the cleaning liquid, the supply channel (14) terminating in an associated aperture (15) which opens to the atmosphere and is positioned on the circumference of the housing (1), and a nozzle in the area of the aperture (15) is provided by a part of the nozzle housing (1) and a portion of an elastic seal (4) which is attached in or on the nozzle housing (1), and the portion of the elastic seal (4), in its normal state, bears against the part of the nozzle housing (1) and closes the aperture (15) or deforms elastically, under the pressure of the cleaning liquid delivered, and provides a nozzle aperture in conjunction with a part of the nozzle housing (1),
**characterized** in that the nozzle housing (1) includes several apertures (15) positioned preferably at the same level and forming a corresponding number of nozzles by a seal (4) which is common to all apertures (15).

2. Nozzle unit as claimed in claim 1,
**characterized** in that the nozzles are all lying at the same level and the seal (4) has preferably an annular shape.

3. Nozzle unit as claimed in any one of the preceding claims, **characterized** in that the nozzles are distributed at a certain distance to each other along the circumferential surface of the cylindrical housing (1).

4. Nozzle unit as claimed in any one of the preceding claims, **characterized** in that the housing (1) is divided and consists of a retaining element (3) with a cover (2) in screw-type or lock-type engagement.

5. Nozzle unit as claimed in claim 4,
**characterized** in that the cover (1) is provided with a fitting (5), connected with the channel (14), for the tube used for the delivery of the cleaning liquid.

6. Nozzle unit as claimed in any one of the preceding claims, **characterized** in that the retaining element is provided with a locking element (8,9) for a lock-type engagement with a wiper arm or the motor hood, the locking element (8,9) preferably including a web (10) which can be in locking engagement with the legs of the locking element (8,9) and embraces thus the wiper arm or a projection on the motor hood.

7. Nozzle unit as claimed in any one of the preceding claims, **characterized** in that one or more areas of the seal are embraced by corresponding projections (6) of the nozzle housing (1) and retained preferably with a preload in the closing direction of the nozzle.

8. Nozzle unit as claimed in any one of the preceding claims, **characterized** in that the nozzle housing includes recesses adjacent to the apertures (15) providing for the freedom of movement of the seal (4) when the nozzle opens.

9. Nozzle unit as claimed in any one of the preceding claims, **characterized** in that in the housing a central supply channel (18) is incorporated, from which channels (14) extend essentially perpendicular to the outer surface (6) and terminate in the apertures (15).

10. Nozzle unit as claimed in any one of the preceding claims, **characterized** in that the annular seal (4) is arranged perpendicular or inclined with regard to the channel (14) terminating in the aperture.

11. Nozzle unit as claimed in any one of the preceding claims, **characterized** in that the essentially annular seal (4) is clamped by means of webs (11) of the cover (2) or the retaining element (3), the walls of the webs delimiting laterally the corresponding channels (14).

12. Nozzle unit as claimed in any one of the preceding claims, **characterized** in that the webs of the cover (2) are provided with snap-in projections (7) by which the cover (2) can be locked with the retaining element (3).

13. Nozzle unit as claimed in any one of the preceding claims, **characterized** in that the central channel (19) has an annular shape, and in that the retaining element (3) and the cover (2) support each other by means of a projection (22,23) of the retaining element (3) and/or the cover forming the inner lateral wall of the central channel.

14. Nozzle unit as claimed in claim 13,
**characterized** in that the cover (2) and the retaining element (3) are screwed and that the screw connection passes at least through one of the projections (22, 23) (Figure 12).

15. Nozzle unit as claimed in any one of the preceding claims, **characterized** in that the circumferential border area (28) of the seal (4) extends angularly with regard to the flat central area due to the preload of the seal, the border area moving into abutment with the aperture (15) and closing it when the cleaning liquid is not under pressure.

## Revendications

1. Corps de gicleur, avec au moins un boîtier de gicleur (1) essentiellement rigide, pour un dispositif de projection et présentant un canal d'alimentation (14) servant à l'apport de liquide de lavage, le canal d'alimentation (14) se terminant dans une embouchure associée (15), ouverte vers l'environnement, sur la périphérie du boîtier de gicleur (1), et un gicleur étant, dans la région de l'embouchure (15), conjointement formé par une partie du boîtier de gicleur (1) et un segment d'une garniture d'étanchéité élastique (4) qui est fixée dans ou sur le boîtier de gicleur (1), le segment de la garniture d'étanchéité élastique (4) s'appliquant à l'état normal contre la partie du boîtier de gicleur (1) et fermant l'embouchure (15), ou, sous la pression du liquide de lavage débité, se déformant élastiquement et formant un orifice de gicleur en coopération avec une partie du boîtier de gicleur (1), **caractérisé** en ce que le boîtier de gicleur (1) présente plusieurs embouchures (15), qui sont situées de préférence dans un même plan et qui, au moyen d'une garniture d'étanchéité (4) commune à toutes les embouchures (15), forment un nombre correspondant de gicleurs.

2. Corps de gicleur selon la revendication 1, **caractérisé** en ce que les gicleurs se trouvent tous dans un même plan et la garniture d'étanchéité (4) est, de préférence, de forme annulaire.

3. Corps de gicleur selon l'une des revendications précédentes, **caractérisé** en ce que les gicleurs sont répartis à distance le long de la face d'enveloppe du boîtier cylindrique (1).

4. Corps de gicleur selon l'une des revendications précédentes, **caractérisé** en ce que le boîtier (1) est divisé et formé d'un corps de fixation (3) sur lequel est enclenché ou vissé un couvercle (2).

5. Corps de gicleur selon la revendication 4, **caractérisé** en ce qu'un piquage (5) relié au canal (14) est prévu sur le couvercle (2) pour le flexible servant à l'apport du liquide de lavage.

6. Corps de gicleur selon l'une des revendications précédentes, **caractérisé** en ce qu'un clip à enclenchement (8, 9) est formé sur le corps de fixation pour l'assemblage par enclenchement avec un bras d'essuie-glace ou le capot moteur, le clip à enclenchement (8, 9) étant pourvu, de préférence, d'une barrette (10) qui peut être assemblée par enclenchement aux branches du clip à enclenchement (8, 9) et embrasse ainsi le bras d'essuie-glace ou, selon le cas, un appendice sur le capot moteur.

7. Corps de gicleur selon l'une des revendications précédentes, **caractérisé** en ce qu'une ou plusieurs régions de la garniture d'étanchéité sont embrassées par des appendices correspondants (6) du boîtier de gicleur (1) et, de préférence, maintenues avec précontrainte dans la position de fermeture du gicleur.

8. Corps de gicleur selon l'une des revendications précédentes, **caractérisé** en ce que le boîtier de gicleur présente des évidements qui sont limitrophes des embouchures (15) et assurent la liberté de déplacement de la garniture d'étanchéité (4) lors de l'ouverture du gicleur.

9. Corps de gicleur selon l'une des revendications précédentes, **caractérisé** en ce qu'un canal d'alimentation central (18) est prévu dans le boîtier, canal d'où partent des canaux (14), qui s'étendent essentiellement perpendiculairement à la surface extérieure (6) et pénètrent dans les embouchures (15).

10. Corps de gicleur selon l'une des revendications précédentes, **caractérisé** en ce que la garniture d'étanchéité annulaire (4) est disposée perpendiculairement au canal (14) pénétrant dans l'embouchure, ou en inclinaison par rapport à ce dernier.

11. Corps de gicleur selon l'une des revendications précédentes, **caractérisé** en ce que la garniture d'étanchéité essentiellement annulaire (4) est enserrée par des nervures (11) du couvercle (2) ou du corps de fixation (3), les parois des nervures délimitant latéralement les canaux associés (14).

12. Corps de gicleur selon l'une des revendications précédentes, **caractérisé** en ce que les nervures du couvercle (2) sont pourvues de saillies d'enclenchement (7) qui permettent d'assembler le couvercle (2) par enclenchement sur le corps de fixation (3).

13. Corps de gicleur selon l'une des revendications précédentes, **caractérisé** en ce que le canal central (19) s'étend annulairement, et le corps de fixation (3) et le couvercle (2) s'appuient l'un contre l'autre au moyen des saillies (22, 23) du corps de fixation (3) et/ou du couvercle qui forment la paroi latérale intérieure du canal central.

14. Corps de gicleur selon la revendication 13, **caractérisé** en ce que le couvercle (2) et le corps de fixation (3) sont boulonnés ensemble, et le boulonnage passe par au moins une des saillies (22, 23) (figure 12).

15. Corps de gicleur selon l'une des revendications précédentes, **caractérisé** en ce que le bord périphérique (28) de la garniture d'étanchéité (4) forme un angle par rapport à sa région centrale plate, du fait de la précontrainte inhérente à la garniture, ce bord s'appliquant contre l'embouchure (15) et la fermant en l'absence de pression du liquide de lavage.
